# EUROPÄISCHE PATENTSCHRIFT

(11) **EP 1 643 088 B1**
(45) Veröffentlichungstag und Bekanntmachung des Hinweises auf die Patenterteilung: **17.02.2010**
(21) Anmeldenummer: 05028621.0
(22) Anmeldetag: 08.07.2004
(51) Int. Cl.: F01M 1/08, F01M 1/16

(54) **Verfahren und Vorrichtung zum Schmieren einer Hubkolbenbrennkraftmaschine**
Method and device for the lubrication of an internal combustion engine
Procédé et dispositif pour lubrifier un moteur à combustion interne

(30) Priorität: 07.08.2003 EP 03405582
(43) Veröffentlichungstag der Anmeldung: 05.04.2006
(62) Teilanmeldung aus: 04405432.8
(73) Patentinhaber: Wärtsilä Schweiz AG, 8401 Winterthur (CH)
(72) Erfinder: Amoser, Matthias, Dr., 8492 Wila (CH); Svimbersky, Karl, 8404 Winterthur (CH); Keller, Heinz, 8404 Winterthur (CH)
(74) Vertreter: Sulzer Management AG

(56) Entgegenhaltungen:
- CH-A5- 613 495
- DE-A1- 2 639 839
- US-A- 4 728 943
- US-A1- 2003 047 386
- PATENT ABSTRACTS OF JAPAN Bd. 018, Nr. 338 (M-1628), 27. Juni 1994 (1994-06-27) & JP 06 081623 A (MITSUBISHI HEAVY IND LTD), 22. März 1994 (1994-03-22)
- PATENT ABSTRACTS OF JAPAN Bd. 009, Nr. 206 (M-406), 23. August 1985 (1985-08-23) & JP 60 067711 A (MITSUBISHI JUKOGYO KK), 18. April 1985 (1985-04-18)

## Beschreibung

Die Erfindung betrifft ein Verfahren sowie eine Vorrichtung zum Schmieren einer Lauffläche einer Zylinderwand eines Zylinders einer Hubkolbenbrennkraftmaschine, insbesondere eines langsam laufenden Grossdieselmotors gemäss dem Oberbegriff des unabhängigen Anspruchs der jeweiligen Kategorie.

Grossdieselmotoren werden häufig als Antriebsaggregate für Schiffe oder auch im stationären Betrieb, z.B. zum Antrieb grosser Generatoren zur Erzeugung elektrischer Energie eingesetzt. Dabei laufen die Motoren in der Regel über beträchtliche Zeiträume im Dauerbetrieb, was hohe Anforderungen an die Betriebssicherheit und die Verfügbarkeit stellt. Daher sind für den Betreiber insbesondere lange Wartungsintervalle, geringer Verschleiss und ein wirtschaftlicher Umgang mit Brenn- und Betriebsstoffen zentrale Kriterien für den Betrieb der Maschinen. Unter anderem ist das Kolbenlaufverhalten solcher grossbohrigen langsam laufenden Dieselmotoren ein bestimmender Faktor für die Länge der Wartungsintervalle, die Verfügbarkeit und über den Schmiermittelverbrauch auch unmittelbar für die Betriebskosten und damit für die Wirtschaftlichkeit. Damit kommt der komplexen Problematik der Schmierung von Grossdieselmotoren eine immer grössere Bedeutung zu.

Bei Grossdieselmotoren, jedoch nicht nur bei diesen, erfolgt die Kolbenschmierung durch Schmiereinrichtungen im sich hin und her bewegenden Kolben oder in der Zylinderwand, durch die Schmieröl auf die Lauffläche der Zylinderwand aufgebracht wird, um die Reibung zwischen Kolben und Lauffläche und damit die Abnützung der Lauffläche und der Kolbenringe zu minimieren. So liegt heute bei modernen Motoren, wie z.B. den Sulzer RTA-Motoren, die Abnutzung der Lauffläche bei weniger als 0.05 mm bei einer Betriebsdauer von 1000 Stunden. Die Schmiermittelfördermenge liegt bei solchen Motoren bei ca. 1.3 g/kWh und weniger und soll nicht zuletzt aus Kostengründen möglichst noch weiter reduziert werden, wobei gleichzeitig der Verschleiss minimiert werden soll.

Als Schmiersysteme zur Schmierung der Laufflächen sind ganz verschiedene Lösungen bekannt, sowohl was die konkrete Ausführung der Schmiereinrichtungen selbst, als auch was die Verfahren zur Schmierung angeht. So sind Schmiereinrichtungen bekannt, bei denen das Schmieröl durch mehrere Schmiermittelöffnungen, die in Umfangsrichtung in der Zylinderwand untergebracht sind, auf den an der Schmiermittelöffnung vorbeilaufenden Kolben aufgebracht werden, wobei das Schmiermittel durch die Kolbenringe sowohl in Umfangsrichtung als auch in axialer Richtung verteilt wird. Dadurch, dass das Schmiermittel bei dieser Methode nicht grossflächig auf die Lauffläche der Zylinderwand, sondern mehr oder weniger punktuell zwischen die Kolbenringe auf die Seitenflächen des Kolbens aufgebracht wird, ist die Verteilung des Schmieröls auf der Lauffläche häufig nur ungenügend gewährleistet, was zu überhöhter Hitzeentwicklung infolge übermässiger Reibung und in letzter Konsequenz lokal zu einem Verschweissen der Kontaktflächen von Kolben und Lauffläche mit darauf folgendem Materialausbruch, also zu einem Kolbenfresser führen kann.

Um eine bessere Verteilung des Schmieröls, d.h. um einen gleichmässigeren Schmierölfilm auf der Lauffläche zu gewährleisten, wird beispielsweise in der WO 00/28194 ein Schmiersystem vorgeschlagen, bei welchem das Schmieröl unter hohem Druck mittels Zerstäubungsdüsen, die in den Zylinderwänden untergebracht sind, im wesentlichen tangential zur Zylinderwand in die im Brennraum befindliche Spülluft gesprüht wird, wobei das Schmieröl zu kleinen Partikeln zerstäubt wird. Dadurch wird das zerstäubte Schmieröl in der Spülluft fein verteilt und durch die Zentrifugalkraft des Dralls, den die Spülluft und damit auch die fein darin verteilten Schmierölpartikel tragen, gegen die Lauffläche der Zylinderwand geschleudert. Bei diesem Verfahren wird zwar ein deutlich gleichmässigerer Schmierölfim auf der Lauffläche erzeugt als bei radialer Schmieröleinspritzung; ein gravierender Nachteil dieses Verfahrens besteht allerdings darin, dass ein nicht unerheblicher Teil des eingesetzten Schmieröls mit der Spülluft weggetragen bzw. beim folgenden Verbrennungstakt mit verbrannt wird. Dadurch entsteht ein unnötig hoher Schmierölverbrauch, was sich deutlich negativ auf die Betriebskosten auswirkt.

Bei einem anderen Verfahren sind im sich bewegenden Kolben bevorzugt mehrere Schmiermitteldüsen untergebracht, so dass das Schmiermittel im wesentliche über die gesamte Höhe der Lauffläche an beliebigen Stellen aufgebracht werden kann.

Dabei ist neben der Art und Weise wie das Schmiermittel auf die Lauffläche der Zylinderwand aufgebracht wird auch die Dosierung des Schmiermittels ein zentraler Punkt. Die pro Zeit- und Flächeneinheit auf die Lauffläche aufzubringende Menge an Schmiermittel kann im Betrieb der Hubkolbenbrennkraftmaschine von vielen verschiedenen Parametern abhängig sein. So spielt beispielsweise die chemische Zusammensetzung des verwendeten Treibstoffs, insbesondere dessen Schwefelgehalt eine bedeutende Rolle. Neben der Schmierung des Zylinders, also der Herabsetzung der Reibung zwischen Kolben und Zylinderlauffläche, genauer zwischen den Kolbenringen und der Lauffläche der Zylinderwand, dient das Schmiermittel unter anderem auch zur Neutralisation aggressiver Säuren, insbesondere von schwefelhaltigen Säuren, die beim Verbrennungsvorgang im Brennraum des Motors entstehen. Daher können je nach verwendetem Treibstoff unterschiedliche Sorten von Schmiermittel zum Einsatz kommen, die sich unter anderem in ihrer Neutralisationsfähigkeit, für die der sogenannte BN-Wert des Schmiermittels ein Mass ist, unterscheiden. So kann es von Vorteil sein bei einem hohem Schwefelgehalt im Brennstoff ein Schmiermittel mit einem höheren BN-Wert zu verwenden, als bei einem Brennstoff mit einem niedrigeren Schwefelgehalt, weil ein Schmiermittel mit einem höheren BN-Wert eine stärkere Neutralisationswirkung gegenüber Säuren aufweist.

Oft ist es jedoch auch möglich, dass für Treibstoffe unterschiedlicher Qualität die gleiche Schmiermittelsorte verwendet werden muss. In solchen Fällen kann dann beispielsweise durch entsprechende Erhöhung oder Erniedrigung der eingesetzten Menge an Schmiermittel ein höherer oder niedrigerer Säuregehalt in den Verbrennungsprodukten kompensiert werden.

Ein weiteres Problem bei der Dosierung der aufzutragenden Schmiermittelmenge stellen zeitliche und / oder örtliche Schwankungen des Zustands des Schmiermittelfilms, insbesondere der Dicke des Schmiermittelfilms im Betriebszustand der Hubkolbenbrennkraftmaschine dar.

Selbstverständlich kann die notwendige Menge an Schmiermittel beispielsweise auch von unterschiedlichsten Betriebsparametern, wie der Drehzahl, der Verbrennungstemperatur, der Motortemperatur, der Kühlleistung zur Kühlung des Motors, der Last und vielen anderen Betriebsparametern mehr abhängig. So kann es möglich sein, dass bei gegebener Drehzahl und höherer Last eine andere Menge an Schmiermittel auf die Lauffläche des Zylinders aufgebracht werden muss, als bei gleicher Drehzahl und niedrigerer Last.

Des weiteren kann auch der Zustand der Verbrennungsmaschine an sich einen Einfluss auf die Schmiermittelmenge haben. So ist es beispielsweise bekannt, dass je nach Verschleisszustand von Zylinderlauffläche, Kolbenringen, Kolben und so weiter die einzusetzende Schmiermittelmenge stark variieren kann. So ist bei einem Zylinder mit einer neuen, noch nicht eingefahren Zylinderlauffläche und / oder bei neuen Kolbenringen in der Einlaufphase eine erhöhte Reibung in gewissem Umfang durchaus erwünscht, damit sich die Gegenlaufpartner, also z.B. Kolbenringe und Lauffläche, einschleifen und so optimal aufeinander einstellen können. Das kann unter anderem dadurch erreicht werden, dass in der Einlaufphase eines Zylinders pauschal mit einer anderen Schmiermittelmenge gearbeitet wird, als bei einem Zylinder, der bereits eine beachtliche Zahl von Betriebsstunden in Betrieb ist. Daher ist bei einer Maschine mit mehreren Zylindern die Schmiermittelmenge insbesondere für jeden Zylinder häufig separat einstellbar.

Auch wird im allgemeinen die Zylinderlauffläche sowohl in Umfangsrichtung als auch in Längsrichtung in Abhängigkeit von der Zahl der geleisteten Betriebsstunden unterschiedlich verschleissen. Das gilt analog beispielsweise auch für die Kolbenringe und die Kolben selbst.

Somit muss die Schmiermittelmenge bei einer Hubkolbenbrennkraftmaschine nicht nur in Abhängigkeit von der Zahl der geleisteten Betriebsstunden eingestellt werden, sondern die Schmiermittelmenge sollte auch innerhalb ein und desselben Zylinders an unterschiedlichen Stellen der Lauffläche der Zylinderwand je nach Anforderungen zeitabhängig und örtlich verschieden dosierbar sein.

Daher ist es seit langem bekannt in einer Lauffläche eines Zylinders oder im sich bewegenden Kolben in unterschiedlichen Bereichen Schmiermitteldüsen vorzusehen, die bevorzugt alle einzeln ansteuerbar sind, so dass die Schmiermittelmenge je nach Anforderung sowohl zeitlich als auch örtlich flexibel variiert werden kann.

Um die von einer bestimmten Schmiermitteldüse zu einem bestimmten Zeitpunkt einzubringende Menge an Schmiermittel zu ermitteln sind verschiedene Verfahren bekannt. In einfachen Fällen wird die Schmiermittelmenge, eventuell unter Berücksichtigung der Qualität des verwendeten Treibstoffs und des Schmiermittels selbst, einfach in Abhängigkeit vom Betriebszustand der Hubkolbenbrennkraftmaschine gesteuert, zum Beispiel als Funktion der Last oder der Drehzahl, wobei aufgrund von bereits geleisteten Betriebsstunden auch der Verschleisszustand der Gegenlaufpartner Berücksichtigung finden kann.

Dabei sind durchaus auch differenziertere Methoden zur Regulierung der Schmiermittelmenge bekannt. So wird beispielsweise in der CH 613 495 eine Zylindervorrichtung für eine Kolbenbrennkraftmaschine offenbart, die zur Verhütung des Fressens von Kolbenringen während des Betriebs abnormale Reibungszustände der Kolbenringe mittels eines Temperatur- oder Vibrationsfühlers detektiert und beim Auftreten solcher Störungen die Schmierölmenge, die von einer bestimmten Schmierstelle abgegeben wird, erhöht. Die EP 0 652 426 zeigt ein Verfahren, bei welchem durch zyklisches Messen der Temperatur in der Zylinderwand das Auftreten von Scuffing bzw. Verschleissfressen anhand eines dafür charakteristischen Temperaturverlaufs erkannt wird und einer entsprechenden Schädigung durch eine automatische Leistungsreduzierung und / oder durch Erhöhung der Schmiermittelzufuhr entgegengewirkt wird. Eine weitere bekannte Methode zum frühzeitigen Erkennen von kritischen Betriebszuständen einer Brennkraftmaschine ist die in der EP 1 006 271 gezeigt Ultraschallmethode, bei welcher mittels in einem Zylinder angeordneten Ultraschallwandlers der Gegenlaufpartner mit Ultraschallsignalen beaufschlagt wird und die reflektierten Echosignale zur Bestimmung des Zustandes des Gegenlaufpartners herangezogen wird. In der US 2003/0047386 ist ein weiteres Verfahren zum Schmieren einer Lauffläche einer Zylinderwand offenbart, bei welchem mittels eines Senors eine für den Schmiermittelfilm charakteristische Kenngrösse bestimmt wird und dami die Schmiermittelmenge reguliert wird.

Allen diesen Vorrichtungen und Verfahren ist jedoch gemeinsam, dass der Ort des Auftretens von Verschleisserscheinungen, wie beginnendes Fressen der Kolbenringe oder das wohlbekannte Scuffing, in der Lauffläche der Zylinderwand nur ungenügend genau oder gar nicht lokalisierbar sind. Das heisst, mit den aus dem Stand der Technik bekannten Verfahren und Vorrichtungen ist zwar das Auftreten abnormaler Betriebszustände der Hubkolbenbrennkraftmaschine grundsätzlich feststellbar, jedoch können deren Ursachen nicht am Ort der Entstehung bekämpft werden, da mit den bekannten Methoden und Vorrichtungen der Ort der Entstehung im Zylinder nicht mit der notwendigen Ortsauflösung detektierbar ist. Was letztlich unter anderem bedeutet, dass die Dicke des Schmiermittelfilms bestenfalls ganz in der Nähe eventuell vorhandenen Sensoren, beispielsweise in der Nähe der oben erwähnten Ultraschallsensoren, zuverlässig bestimmt werden kann. Der Zustand des Schmiermittelfilms in seiner gesamten Ausdehnung über die Lauffläche der Zylinderwand ist dagegen nicht kontrollierbar.

Wird beispielsweise bei einer aus dem Stand der Technik bekannten Vorrichtung in einem bestimmten Zylinder das Auftreten von Kolbenfressen oder Scuffing detektiert, so wird für diesen Zylinder die Schmiermittelmenge so lange erhöht, bis der detektierte abnormale Betriebszustand wieder verschwindet und die diesem Zylinder pro Zeiteinheit zugeführte Schmiermittelmenge wieder reduziert werden kann.

So unterscheidet der Fachmann den Bereich der sogenannten hydrodynamischen Schmierung, vom Zustand der Mangelschmierung und der Mischschmierung. Von hydrodynamischer Schmierung spricht man, wenn sich zwischen den Gegenlaufpartnem, also zum Beispiel zwischen der Lauffläche einer Zylinderwand und dem Kolbenring eines Kolbens ein Schmiermittelfilm von solcher Dicke ausgebildet ist, dass die Oberflächen der Gegenlaufpartner durch den Schmiermittelfilm voneinander wohlgetrennt sind, so dass diese sich nicht berühren. Einen anderen Grenzfall stellt der sogenannte Zustand der Mischreibung oder Mischschmierung dar. Im Falle der Mischreibung ist der Schmiermittelfilm zwischen den Gegenlaufpartner, zumindest teilweise, so dünn, dass sich die Gegenlaufpartner unmittelbar berühren. In diesem Fall besteht die Gefahr von Scuffing und letztlich der Ausbildung eines Kolbenfressers. Zwischen diesen beiden Grenzfällen ist die sogenannte Mangelschmierung angesiedelt. Im Zustand der Mangelschmierung ist der Schmiermittelfilm gerade noch so dick, dass sich die Gegenlaufpartner nicht mehr berühren; die Schmiermittelmenge zwischen den Gegenlaufpartnern reicht jedoch nicht aus, dass sich eine hydrodynamische Schmierung aufbauen könnte. Im Stand der Technik wird sowohl der Zustand der Mischschmierung, als auch der Mangelschmierung möglichst verhindert. Das heisst, die Dicke des Schmiermittelfilms wird bevorzugt so gewählt, dass sich ein Zustand der hydrodynamischen Schmierung zwischen den Gegenlaufpartnern einstellt.

Der Betrieb im Bereich der hydrodynamischen Schmierung hat natürlich einen entsprechend hohen Schmiermittelverbrauch zur Folge. Das ist einerseits nicht nur ausgesprochen unwirtschaftlich, sondern es hat sich überraschenderweise auch gezeigt, dass nicht nur ein Schmiermittelmangel, sondern auch ein Schmiermittelüberschuss zu Schädigungen der Gegenlaufpartner im Zylinder führen kann.

Die Aufgabe der Erfindung ist es daher, ein verbessertes Verfahren und eine verbesserte Vorrichtung zum Schmieren einer Hubkolbenbrennkraftmaschine vorzuschlagen.

Die diese Aufgaben in verfahrenstechnischer und apparativer Hinsicht lösenden Gegenstände der Erfindung sind durch die Merkmale des unabhängigen Anspruchs der jeweiligen Kategorie gekennzeichnet.

Die jeweiligen abhängigen Ansprüche beziehen sich auf besonders vorteilhafte Ausführungsformen der Erfindung.

Die Erfindung betrifft somit ein Verfahren zum Schmieren einer Lauffläche einer Zylinderwand eines Zylinders einer Hubkolbenbrennkraftmaschine, insbesondere eines langsam laufenden Grossdieselmotors, in welchem Zylinder ein Kolben entlang der Lauffläche hin- und herbewegbar angeordnet ist. Bei dem Verfahren wird mittels einer Schmiermitteldüse ein Schmiermittelfilm auf die Lauffläche der Zylinderwand aufgebracht und mittels eines Sensors eine für den Schmiermittelfilm charakteristische Kenngrösse bestimmt. Dabei wird der Sensor erfindungsgemäss in einem Kolbenring vorgesehen und es wird mit einer Ansteuereinheit, die Regelmittel umfasst, mit Hilfe eines Signals des Sensors die Schmiermitteldüse derart angesteuert, dass ein Zustandsparameter des Schmiermittelfilms auf der Lauffläche der Zylinderwand optimiert wird.

Der Erfindung liegt die wesentliche Erkenntnis zugrunde, dass zum Erreichen eines optimalen Betriebszustands der Hubkolbenbrennkraftmaschine ein Zustandsparameter, zum Beispiel die Dicke des Schmiermittelfilms auf der Lauffläche des Zylinders, bevorzugt sogar lokal, optimiert werden muss. Das heisst, primär entscheidend ist nicht die zugeführte Menge an Schmiermittel als solches, sondern ein aktueller Wert des Zustandsparameters, zum Beispiel die aktuelle Dicke des Schmiermittelfilms auf der Lauffläche des Zylinders, wobei ein Sollwert für den Zustandsparameter unter anderem noch vom Betriebszustand der Brennkraftmaschine, den Eigenschaften der verwendeten Betriebsmittel usw. abhängen kann.

Bevorzugt, jedoch nicht notwendig, wird die Schmiermittelmenge auf der Lauffläche der Zylinderwand so eingestellt, dass sich eine Dicke des Schmiermittelfilms ausbildet, so dass im wesentlichen der Zustand der Mangelschmierung erreicht wird. Im Zustand der Mangelschmierung ist der Schmiermittelfilm so ausgebildet, dass sich die Gegenlaufpartner nicht mehr berühren, wobei die Schmiermittelmenge zwischen den Gegenlaufpartnern nicht ausreicht, um eine hydrodynamische Schmierung zwischen den Gegenlaufpartner aufzubauen.

Daher umfasst die Vorrichtung zur Durchführung des erfindungsgemässen Verfahrens einen geeigneten Sensor, der die Messung einer charakteristischen Kenngrösse des Schmiermittelfilms auf der Lauffläche der Zylinderwand gestattet, so dass mit Hilfe einer Ansteuereinheit die Schmiermitteldüse derart angesteuert wird, dass der Zustandsparameter des Schmiermittelfilms, insbesondere die Dicke des Schmiermittelfilms auf der Lauffläche optimiert wird.

Dabei kann der Zustand des Schmiermittelfilms auf der Lauffläche der Zylinderwand durch unterschiedliche Parameter bestimmt sein. So kann die charakteristische Kenngrösse unter anderem die Dicke des Schmiermittelfilms und / oder die Alkalinität und / oder die Temperatur und / oder die Viskosität und / oder der Wassergehalt und / oder der Säuregehalt des Schmiermittelfilms sein und somit den Ist-Zustand des Schmiermittelfilms bestimmen. Daher kann durch Messung von einer oder mehrerer dieser charakteristischen Kenngrössen der Zustand des Schmiermittelfilms auf der Lauffläche der Zylinderwand bestimmt werden.

Während bei den aus dem Stand der Technik bekannten Verfahren die zugeführte Schmiermittelmenge beim Auftreten von erhöhter Reibung zwischen den Gegenlaufpartnern im Zylinder, z.B. beim Auftreten von Scuffing, zur Verbesserung der Reibeigenschaften einfach erhöht wird, wird bei dem erfindungsgemässen Verfahren die Zufuhr durch die Schmiermitteldüse derart gesteuert und / oder geregelt, dass sich ein optimaler Wert des Zustandsparameters, z.B. eine optimale Dicke des Schmiermittelfilms einstellt, wodurch die tribologischen Laufeigenschaften optimiert werden. Selbstverständlich kann der Zustandsparameter ausser der Dicke des Schmiermittelfilms auch die Alkalinität und / oder die Temperatur und / oder die Viskosität und / oder der Wassergehalt und / oder der Säuregehalt des Schmiermittelfilms sein. Daher ist es möglich dass entweder nur einer dieser Zustandsparameter optimiert wird, oder zwei oder mehrere dieser Zustandsparameter gleichzeitig optimiert wird.

Insbesondere ist weder die Liste der zuvor genannten Kenngrössen noch die Liste der genannten Zustandsparameter abschliessend zu verstehen. Auch andere Eigenschaften des Schmiermittelfilms können vorteilhaft als charakteristische Kenngrössen des Schmiermittelfilms herangezogen werden und entsprechend als Zustandsparameter optimiert werden. Es versteht sich darüber hinaus, dass zur Optimierung eines bestimmten Zustandsparameters, zum Beispiel zur Optimierung der Dicke des Schmiermittelfilms auf der Lauffläche der Zylinderwand, unter Heranziehung jeder geeigneten Kenngrösse erfolgen kann. So kann es beispielsweise je nach Anwedung vorteilhaft sein, als charakteristische Kenngrösse die Alkalinität des Schmiermittelfilms zu bestimmen und mit Hilfe dieser Information die Schmiermitteldüse derart anzusteuern, dass eine andere Zustandsgrösse als die Alkalinität des Schmiermittelfilms, zum Beispiel die Dicke des Schmiermittelfilms optimiert.

Da sich, wie bereits oben erwähnt, auch eine zu grosse Menge an Schmiermittel auf der Lauffläche der Zylinderwand deutlich negativ auf die Reibung zwischen den Gegenlaufpartnern im Zylinder auswirken kann, können die aus dem Stand der Technik bekannten Verfahren, die bei sich erhöhender oder erhöhter Reibung im Zylinder ohne Rücksicht z.B. auf die tatsächliche Dicke des Schmiermittelfilms die Schmiermittelmenge immer weiter erhöhen, letztlich schwere Schäden bis hin zum Kolbenfresser im Zylinder der Hubkolbenbrennkraftmaschine verursachen.

Das erfindungsgemässe Verfahren berücksichtigt dagegen eine oder mehrere der charakteristischen Kenngrössen, wie zum Beispiel die tatsächliche Dicke des Schmiermittelfilms und regelt durch Steuerung der Schmiermittelzufuhr einen oder mehrere Zustandsparameter, z.B. die optimale Dicke des Schmiermittelfilms ein. Das heisst, wenn eine erhöhte Reibung zwischen den Gegenlaufpartnern im Zylinder beispielsweise durch eine zu hohe Schmiermittelmenge auf der Lauffläche des Zylinders verursacht ist, wird bei dem erfindungsgemässen Verfahren die Schmiermittelmenge nicht automatisch erhöht, sondern soweit reduziert, dass sich wieder zum Beispiel eine optimale Dicke des Schmiermittelfilms auf der Lauffläche des Zylinders einstellt.

Dadurch werden nicht nur Fehlsteuerungen bei der Schmiermittelzufuhr der zuvor beschrieben Art verhindert, sondern der Schmiermittelverbrauch wird darüber hinaus automatisch bei gleichzeitiger Optimierung der Laufeigenschaften, minimiert.

Bevorzugt wird dabei der Zustandsparameter, insbesondere die Dicke des Schmiermittelfilms lokal optimiert. Dazu können, zum Beispiel in der Zylinderwand oder im Kolben der Hubkolbenbrennkraftmaschine, eine oder mehrere Schmiermitteldüsen vorgesehen sein, die entweder einzeln oder in Gruppen durch die Ansteuereinheit angesteuert werden und vorteilhaft an verschiedenen Positionen sowohl in Umfangsrichtung als auch in axialer Richtung über die Zylinderwand oder den Kolben verteilt sein können. Insbesondere können mehrere Sensoren so betrieben werden und an geeigneten Stellen derart positioniert sein, dass die Dicke des Schmiermittelfilms mit genügend grosser Ortsauflösung bestimmt wird, so dass zum Beispiel die Dicke des Schmiermittelfilms auf der Lauffläche der Zylinderwand lokal optimiert werden kann. Somit kann insbesondere in ein und demselben Zylinder an einem und / oder verschiedenen Orten der Lauffläche zur gleichen Zeit und / oder zu verschiedenen Zeiten durch zwei verschiedene Schmiermitteldüsen jeweils eine unterschiedliche Menge an Schmiermittel zugeführt werden, so dass unabhängig voneinander an beiden Orten auf der Lauffläche der Zylinderwand die Dicke des Schmiermittelfilms, oder ein anderer Zustandsparameter optimiert wird. Insbesondere kann durch geeignete Wahl des Zeitpunktes der Schmiermittelzufuhr das Schmiermittel beispielsweise in Laufrichtung des Kolbens auf der Lauffläche des Zylinders besser verteilt werden, indem das Schmiermittel kurz bevor der Kolben eine bestimmte Schmiermitteldüse passiert, durch diese bestimmte Schmiermitteldüse zugeführt wird. Das heisst, je nach Bewegung des Kolbens in Richtung zum oberen Totpunkt oder davon weg ist so das Schmiermittel auf der Lauffläche des Zylinders in der jeweiligen Richtung optimal verteilbar.

Dabei wird bei einer besonders bevorzugten Ausführungsvariante des erfindungsgemässen Verfahrens ein Sollwert für die Dicke des Schmiermittelfilms in Abhängigkeit von verschiedenen Betriebsparametern der Hubkolbenbrennkraftmaschine, insbesondere in Abhängigkeit von der Drehzahl und / oder der Last und / oder der Zylindertemperatur und / oder anderen Betriebsparametern und / oder in Abhängigkeit von der Zusammensetzung eines Brennstoffs und / oder des Schmiermittels und /oder anderer Betriebsstoffe, mit Hilfe einer Lookup-Table, die in Form eines mehrdimensionalen Datenfeldes vorliegen kann, bestimmt, und die Dicke des Schmiermittelfilms auf den Sollwert optimiert.

In der Lookup-Table, die beispielsweise als Datenbank in eine Datenverarbeitungsanlage, die Teil der Ansteuereinheit sein kann, geladen wird, sind wichtige, für die Ermittlung der optimalen Dicke des Schmierfilms relevante Daten gespeichert. Bevorzugt werden mit geeigneten Einrichtungen, die im wesentlichen für Hubkolbenbrennkraftmaschinen bereits bekannt sind, zusätzlich aktuelle Betriebsparameter wie beispielsweise Drehzahl und / oder Last und / oder die Zylindertemperatur und / oder die Temperatur im Brennraum und / oder andere aktuelle Betriebsparameter bestimmt, aus denen dann zusammen mit den in der Lookup-Table hinterlegten Daten der Sollwert für den Zustandsparameter, z.B. der Sollwert für die Dicke des Schmiermittelfilms für jeden Betriebszustand bestimmt wird. Da insbesondere unter anderem auch die verwendeten Betriebsmittel und deren Eigenschaften, zum Beispiel der verwendete Treibstoff, vor allem dessen Schwefelgehalt und / oder die Art des verwendeten Schmiermittels und / oder der BN-Wert des Schmiermittels, für den optimalen Wert des Zustandsparameters eine zentrale Rolle spielen, können auch diese zur Ermittlung des Sollwerts vorteilhaft herangezogen und im Betrieb durch geeignete Messeinrichtung ständig überwacht werden.

Es versteht sich, dass die oben genannte Aufzählung von Parametern und /oder Daten des Betriebszustands der Hubkolbenbrennkraftmaschine, die zur Ermittlung des Sollwerts des Zustandsparameters vorteilhaft herangezogen werden können, nicht abschliessend ist, sondern auch weitere für die Bestimmung des Sollwerts relevante Parameter und Daten enthalten kann.

Die Vorrichtung zur Durchführung des erfindungsgemässen Verfahrens weist dabei, wie bereits erwähnt, mindestens eine in der Zylinderwand und / oder im Kolben angeordnete Schmiermitteldüse zum Aufbringen des Schmiermittelfilms auf die Lauffäche der Zylinderwand auf, sowie mindestens einen in einem Kolbenring vorgesehenen Sensor zur Messung der Dicke des Schmiermittelfilms, wobei eine Ansteuereinheit für die Schmiermitteldüse vorgesehen ist und die Ansteuereinheit Regelmittel umfasst, welche mit Hilfe eines Signals des Sensors die Schmiermitteldüse derart ansteuert, dass die Dicke des Schmiermittelfilms auf der Lauffläche der Zylinderwand optimiert ist.

Dabei können weitere Sensoren vorteilhaft an unterschiedlichen Stellen im Zylinder angeordnet werden, wobei die Anordnung des Sensors unter anderem von der Art des Sensors abhängen kann, jedoch nicht davon abhängen muss.

Bevorzugt wird bei der Messung der Dicke des Schmiermittelfilms auf der Lauffläche der Zylinderwand des Zylinders eine genügend hohe Ortsauflösung angestrebt. Dazu können verschiedene Massnahmen geeignet eingesetzt werden.

Erfindungsgemäss ist der Sensor in einem Kolbenring angeordnet. Diese Anordnung ist besonders dann vorteilhaft einsetzbar, wenn ein Sensor zum Einsatz kommt, der im wesentlichen nur eine lokal eng begrenzte Messung zulässt. Solche Sensoren können zum Beispiel Ultraschallwandler sein, die die Dicke des Schmiermittelfilms aus einem Ultraschallecho bestimmen oder kapazitive, induktive Sensoren, Wirbelstromsensoren oder Widerstandssensoren, die die Dicke des Schmiermittelfilms aus einer entsprechenden Kapazitäts-, Induktivitäts oder Widerstandsänderung bestimmen. Selbstverständlich können auch andere Typen von Sensoren, wie zum Beispiel Temperatursensoren vorgesehen sein. Dabei können im Kolbenring nicht nur lokal wirkende Sensoren vorteilhaft Verwendung finden, sondern auch solche, die beispielsweise durch Zusammenwirken mit anderen Sensoren grosssflächige Messungen der Dicke des Schmiermittelfilms erlauben. Insbesondere kann die Kombination verschiedener Sensortypen in speziellen Fällen von Vorteil sein.

Die besonderen Vorteile eines im Kolbenring angeordneten Sensors liegen auf der Hand. Durch die Bewegung des Kolbens im Betriebszustand entlang der Lauffläche der Zylinderwand, wird der Sensor zumindest in Richtung einer Längsachse des Zylinders entlang der Lauffläche der Zylinderwand geführt, so dass die Dicke des Schmiermittelfilms im wesentlichen über die gesamte relevante Lauffläche der Zylinderwand durch den Sensor ständig lokal überwacht und die Dicke des Schmiermittelfilms lokal optimiert werden kann. Die Ortsauflösung lässt sich dabei noch weiter erhöhen, wenn in Umfangsrichtung des Kolbens zwei oder mehr Sensoren vorgesehen sind.

Dabei muss der Sensor zur Bestimmung der charakteristischen Kenngrösse, z.B. der Sensor zur Messung der Dicke des Schmiermittelfilms selbstverständlich nicht zwingend ausschliesslich in einer Aussparung des Kolbenrings vorgesehen sein, sondern zusätzlich kann ein weiterer Sensor ebenso noch in der Zylinderwand oder in einem Zylinderdeckel des Zylinders oder in einem dem Zylinder benachbarten Bauteil angeordnet sein.

Unter anderem werden in der Zylinderwand und / oder im Zylinderdeckel und / oder in einem dem Zylinder benachbarten Bauteil bevorzugt passive Körperschallsensoren eingesetzt. Das hierbei angewandte Messprinzip beruht auf der Detektion von Schallschwingungen, sogenannten Körperschallschwingungen, die die verschiedenen Komponenten der Hubkolbenbrennkraftmaschine im Betriebszustand aussenden. Dabei ist der passive Körperschallsensor selbst nur ein Detektor, z.B. ein piezoelektrischer Detektor, im Prinzip ein Mikrofon, dass die Körperschallwellen, die in der Hubkolbenbrennkraftmaschine erzeugt werden, detektiert und der Ansteuereinheit zum Beispiel in Form eines elektrischen Signals zur weiteren Auswertung zuführt. Aus einem Muster der detektierten Körperschallwellen lässt sich dann, eventuell unter Zusammenwirkung mehrerer Sensoren bei Berücksichtigung von Laufzeiteffekten, auf die charakteristische Kenngrösse des Schmiermittelfilms, insbesondere auf die Dicke des Schmiermittelfilms an einem bestimmbaren Ort auf der Lauffläche der Zylinderwand schliessen. Ein wesentlicher Unterschied des passiven Körperschallsensors zum Ultraschallsensor besteht somit darin, dass der passive Körperschallsensor aktiv keine eigenen Messsignale, wie beispielsweise Ultraschallpulse, in den zu untersuchenden Gegenstand aussendet.

Im folgenden soll das Messprinzip mittels Körperschallsensoren noch etwas detaillierter erläutert werden. Akustische Emissionen sind elastische Wellen elastischer Spannungen, die im wesentlichen dadurch entstehen, dass zum Beispiel die Komponenten der Hubkolbenbrennkraftmaschine, wie Zylinder, Kolben, Kolbenringe usw. Spannungsenergie absorbieren und wieder abgeben. Akustische Wellen können somit zum Beispiel aufgrund plötzlicher Spannungsänderungen im Material auftreten, insbesondere durch Mikroereignisse wie Mikrobrüche, Mikrorisse oder durch spontane mikroskopische Materialverzerrungen. Bei Zylindern, in Laufflächen von Zylinderwänden, Kolben, Kolbenringen usw., die in der Regel zumindest teilweise aus Metallen oder beschichteten Metallen bestehen, liegen typische lineare Ausdehnungen der zuvor exemplarisch genannten Mikroereignisse bei ca. 10 µm bis etwa zu 100 µm. Sie entstehen dabei spontan mit sehr hohen Geschwindigkeiten, die bei Stahl in einer Grössenordnung von ca. 300 m/s liegen können. Die Amplitude und / oder das Frequenzspektrum der dabei ausgesandten akustischen Welle, eventuell unter Berücksichtigung der Dämpfung im Material, ist ein Mass für die Stärke, das Ausmass und die Art des Mikroereignisses. Akustische Wellen sind somit sehr unmittelbar mit Ereignissen wie Mikrobrüchen, Mikrorissen oder mit spontanen mikroskopische Materialverzerrungen verknüpft und damit sehr gut geeignet zerstörungsfrei das gesamte Volumen eines zu untersuchenden Objekts, auch mit sehr komplizierter geometrischer Struktur, praktisch in Echtzeit zu untersuchen.

In Metallen sind die Hauptquellen akustischer Emissionen somit sehr häufig plastische Deformationsprozesse und das Wachstum von Schäden, wie zum Beispiel das Wachstum von Rissen oder Brüchen im Material, die charakteristische Energieverteilungen aufweisen. Unter anderem kann durch diese und andere Prozesse ein explosionsartiges Schallereignisse, ein sogenannter Burst, erzeugt werden, der, abhängig vom Typ und der Grösse der Schallquelle und in Abhängigkeit von der Schallgeschwindigkeit des betrachteten Materials, typischerweise Frequenzen vom hörbaren bis in den hohen Ultraschallbereich umfassen kann. Dabei werden sowohl akustische Kompressionswellen, also longitudinale Wellen, als auch transversal polarisierte Wellen erzeugt, deren Spektren, Polarisation, Ausbreitungsgeschwindigkeiten, relative Dämpfung und relative Intensitäten Aufschlüsse über die Mikroereignisse geben können.

Wesentlich ist, dass eine oder mehrere der charakteristischen Kenngrössen, unter anderem natürlich auch die Dicke des Schmiermittelfilms zwischen den Gegenlaufpartner im Zylinder der Hubkolbenbrennkraftmaschine, also z.B. zwischen Lauffläche und / oder Kolben und / oder Kolbenring entsprechende Auswirkungen auf die aufgrund der gegenseitigen Reibungseffekte entstehenden akustischen Emissionen und Schallwellen hat.

Somit ist es möglich durch den Einsatz von einem oder mehreren Körperschallsensoren, den Körperschall der Hubkolbenbrennkraftmaschine zu detektieren und durch geeignete Auswertung, unter anderem unter zusätzlicher Berücksichtigung von Laufzeiteffekten, die zum Beispiel zwischen verschiedenen Sensoren messbar sein können, entsprechende Schallquellen auf der Lauffläche einer Zylinderwand exakt zu lokalisieren und Rückschlüsse auf eine charakteristische Kenngrösse des Schmiermittelfilms, insbesondere auf die Dicke des Schmiermittelfilms zu ziehen, so dass ein Zustandsparameter, z.B. die Dicke des Schmiermittelfilms entsprechend lokal optimiert werden kann.

Selbstverständlich kann neben dem zuvor beschriebenen passiven Körperschallsensor auch ein aktiver Schallsensor, insbesondere ein piezoelektrischer Ultraschallsensor, erfolgreich Verwendung finden. Bei Verwendung von aktiven Ultraschallsensoren werden die Gegenlaufpartner, also insbesondere die Lauffläche der Zylinderwand und/ oder die Kolben und /oder die Kolbenringe mit Ultraschallsignalen, bevorzugt mit kurzen Ultraschallimpulsen, die der aktive Schallsensor z.B. bei Anlegen einer geeigneten elektrischen Wechselspannung erzeugen kann, beaufschlagt. Diese Ultraschallimpulse werden an den Grenzflächen zwischen zwei Medien mit verschiedenem Schallwellenwiderstand teilweise reflektiert und teilweise transmittiert. Die reflektierten Signale gelangen als sogenannte Echosignale zum Ultraschallwandler zurück, der diese in elektrische Signale umwandelt und die dann der Ansteuereinheit zur Auswertung zugeführt werden. Aus der relativen Dämpfung zweier aufeinander am Ultraschallsensor empfangener Echos und / oder aus der Laufzeit und / oder aus dem Frequenzgang der Ultraschallechos lässt sich dann auf einfache, im Prinzip bekannte Weise, die Dicke des Schmiermittelfilms bestimmen, die die Ultraschallimpulse bzw. die Ultraschallechos auf ihrem Weg vom Ultraschallsensor weg und zu diesem zurück durchlaufen haben.

Es versteht sich dass die oben beschriebene Messung auch durch Kombination eines aktiven Schallsensors mit einem passiven Schallsensor durchgeführt werden kann. Der aktive Schallsensor kann in dieser Anordnung zur Erzeugung eines Schallsignals dienen, das unter anderem den zu messenden Schmiermittelfilm durchläuft, wobei das Schallsignal nach ein oder mehrmaligem Durchlaufen des Schmiermittelfilms von einem zweiten geeignet angeordneten passiven Schallsensor detektiert wird, so dass zum Beispiel aus der relativen Dämpfung zweier aufeinander am passiven Ultraschallsensor empfangener Echos der Schallsignale und / oder aus der Laufzeit und / oder aus dem Frequenzgang der Schallsignale die Dicke des Schmiermittelfilms bestimmbar ist, so dass eine Schmiermitteldüse derart angesteuert wird, dass ein Zustandsparameter des Schmiermittelfilms auf der Lauffläche der Zylinderwand optimiert ist.

Neben den zuvor beschriebenen Schallsensoren können natürlich auch andere Sensoren sehr vorteilhaft zur Bestimmung der Kenngrösse des Schmiermittelfilms und damit zur Optimierung des Zustandsparameters des Schmiermittelfilms eingesetzt werden. So kann der Sensor unter anderem ein Induktionssensor, ein kapazitiver Sensor, ein elektrischer Widerstandssensor ein Temperatursensor oder auch ein chemischer Sensor sein, mit dem zum Beispiel der Schwefelgehalt, der pH-Wert oder ganz allgemein die chemische Zusammensetzung von Schmiermittel, Treibstoff oder auch der Verbrennungsprodukte der Hubkolbenbrennkraftmaschine bestimmt werden können.

Es versteht sich, dass in speziellen Fällen selbstverständlich auch jede geeignete Kombination von Sensoren vorteilhaft eingesetzt werden kann und alle Sensoren prinzipiell und je nach Anforderung sowohl als mitbewegte Sensoren im Kolben und / oder im Kolbenring vorgesehen sein können und /oder als stationäre Sensoren in oder an der Zylinderwand und /oder in oder am Zylinderdeckel und / oder in einem dem Zylinder benachbarten Bauteil der Hubkolbenbrennkraftmaschine plaziert sein können.

Insbesondere können natürlich auch im Kolben mitbewegte Sensoren mit geeignet stationär angeordneten Sensoren kombiniert werden. Was die räumliche Anordnung der Sensoren angeht haben sich insbesondere die passiven Schallsensoren als sehr flexibel herausgestellt. Der Grund dafür ist, dass mit diesen Sensoren bzw. mit dem oben beschriebenen Messverfahren auch sehr komplexe Geometrien sehr zuverlässig und mit sehr hoher Ortsauflösung untersucht werden können, insbesondere dann wenn mehrere Sensoren an unterschiedlichen Stellen am Zylinder und / oder am Kolben plaziert werden, so dass zur Bestimmung der Kenngrösse des Schmiermittelfilms die Signale dieser mehreren Sensoren geeignet kombiniert werden können.

Die Erfindung wird im folgenden an Hand der schematischen Zeichnung näher erläutert. Es zeigen:
- Fig. 1: eine Vorrichtung mit einem Sensor in der Zylinderwand;
- Fig. 2: schematisch ein Verfahren unter Verwendung einer Lookup-Table;
- Fig. 2a: eine Lookup-Table zur Ermittlung eines Sollwerts für die Dicke des Schmiermittelfilms;
- Fig. 3: ein Induktionssensor angeordnet in einem Kolbenring.

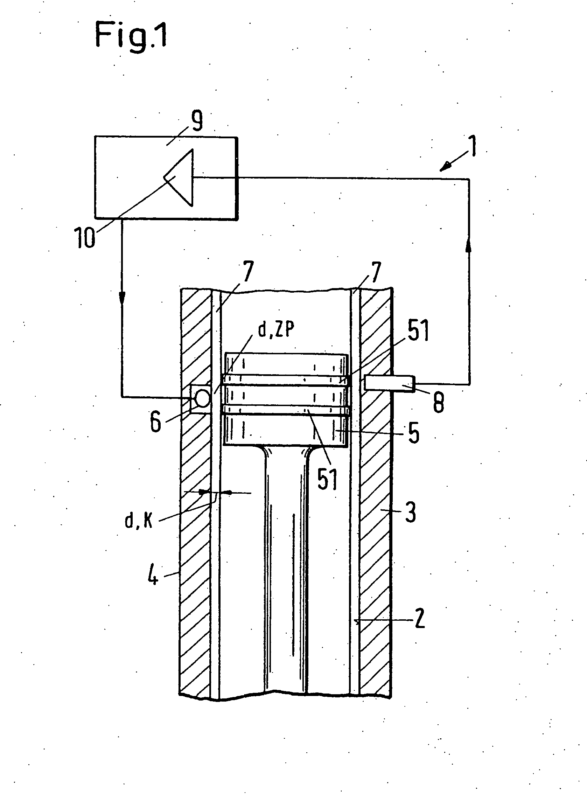

Zur Erläuterung des Prinzips der Messung der Dicke des Schmiermittelfilms ist in Fig. 1 schematisch eine nicht erfindungsgemässe Vorrichtung 1 mit einem Sensor in der Zylinderwand dargestellt. Die Vorrichtung umfasst einen Zylinder 4 mit einer Zylinderwand 3, die einen Brennraum einer Hubkolbenbrennkraftmaschine in an sich bekannter Weise in Umfangsrichtung begrenzt. Innerhalb des Zylinders 4 ist ein Kolben 5 vorgesehen, der bezüglich einer Längsachse des Zylinders 4 in axialer Richtung entlang einer Lauffläche 2 der Zylinderwand 3 hin- und herbewegbar angeordnet ist. In der Zylinderwand 3 ist mindestens eine Schmiermitteldüse 6 angeordnet, mit welcher ein Schmiermittelfilm 7 auf die Lauffläche 2 der Zylinderwand 3 im Betriebszustand aufgebracht wird. Mittels eines Sensors 8 wird eine charakteristische Kenngrösse K des Schmiermittelfilms 7 bestimmt, wobei im Beispiel der Fig. 1 exemplarisch ein Sensor gezeigt ist, mit welchem eine Dicke d des Schmiermittelfilms 7 gemessen wird. Der Sensor 8 und die Schmiermitteldüse 6 sind mit einer Ansteuereinheit 9, die Regelmittel 10 umfasst, signalverbunden, so dass mit Hilfe eines Signals des Sensors 8 die Schmiermitteldüse 6 derart angesteuert wird, dass ein Zustandsparameter ZP des Schmiermittelfilms 7, im vorliegenden Beispiel die Dicke d des Schmiermittelfilms 7 auf der Lauffläche 2 der Zylinderwand 3 optimiert wird. Dabei ist in Fig. 1 exemplarisch jeweils nur eine Schmiermitteldüse 6 und nur 1 Sensor dargestellt. Es versteht sich, dass jeder Zylinder 4 der Hubkolbenbrennkraftmaschine jeweils mehrere gleichartige oder verschiedenartige Sensoren 8 und mehrere Schmiermitteldüsen 6 aufweisen können, die geeignet an verschiedenen Stellen in und / oder an der Zylinderwand 3 vorgesehen sein können.

Die Ansteuereinheit 9 umfasst dabei bevorzugt eine hier nicht explizit dargestellte Datenverarbeitungsanlage, mit welcher die Signale des Sensors 8 ausgewertet werden können, so dass die Schmiermitteldüse 6 von den Regelmitteln 10 derart angesteuert wird, dass der Zustandsparameter ZP, also hier die Dicke d des Schmiermittelfilms 7 auf der Zylinderwand 3 optimiert wird.

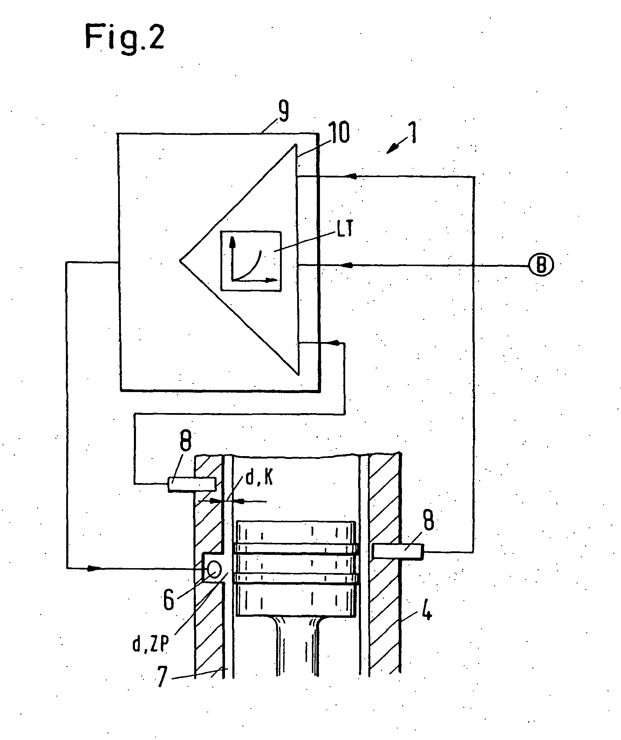

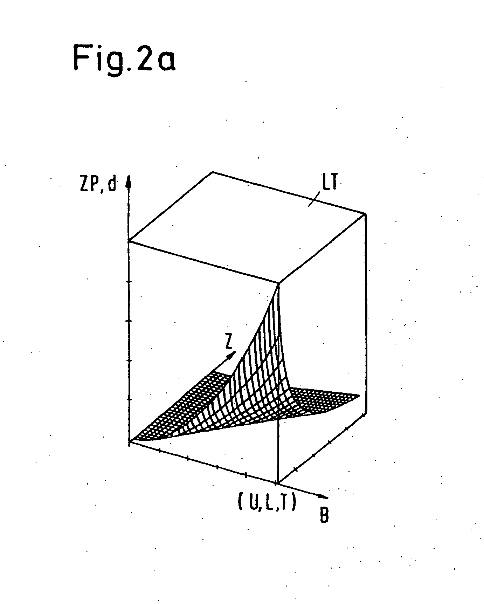

In Fig. 2 ist schematisch ein Verfahren unter Verwendung einer Lookup-Table dargestellt, bei welcher ein Sollwert für den Zustandsparameter ZP, im hier speziell dargestellten Beispiel für die Dicke d des Schmiermittelfilms 7 in Abhängigkeit von verschiedenen Betriebsparametern B der Hubkolbenbrennkraftmaschine, insbesondere in Abhängigkeit von der Drehzahl U und / oder der Last L und / oder der Zylindertemperatur T und / oder anderen Betriebsparametern B und / oder in Abhängigkeit von der Zusammensetzung Z des verwendeten Brennstoffs und / oder des Schmiermittels und / oder anderer Betriebsstoffe, mit Hilfe einer Lookup-Table LT, die in Form eines mehrdimensionalen Datenfeldes vorliegt, bestimmt wird. Der Zustandsparameter ZP, hier die Dicke d des Schmiermittelfilms 7 wird dabei im Betriebszustand der Hubkolbenbrennkraftmaschine auf den mit Hilfe der Lookup-Table LT ermittelten Sollwert für den Zustandsparameter ZP, hier die Dicke d des Schmiermittelfilms 7 optimiert.

Mittels des Sensors 8, der zum Beispiel ein passiver Körperschallsensor zur Detektion von Körperschallwellen aus der Hubkolbenbrennkraftmaschine ist und der bei einer erfindungsgemässen Vorrichtung 1 selbstverständlich am Kolbenring 51 und im Speziellen zusätzlich im Kolben 5 und / oder in einem hier nicht dargestellten Zylinderdeckel und / oder in einem dem Zylinder 4 benachbarten Bauteil der Hubkolbenbrennkraftmaschine angeordnet sein kann, wird zum Beispiel die aktuelle Dicke d des Schmiermittelfilms 7 gemessen und der Wert der Ansteuereinheit 9, die insbesondere eine Datenverarbeitungsanlage sowie Regelmittel 10 umfasst, zugeführt. Dabei sind bevorzugt, wie in Fig. 2 schematisch dargestellt, mehrere Sensoren 8 zur Messung der Dicke d des Schmiermittelfilms 7 vorgesehen. Wenn die Sensoren 8 zum Beispiel, wie zuvor erwähnt, passive Körperschallsensoren sind, so kann unter anderem durch Ermittlung von Laufzeitunterschieden der von den Sensoren 8 detektierten Signale, und / oder unter Heranziehung der bekannten Technik der Korrelation von Signalen, d.h. der Untersuchung der entsprechenden Korrelationsfunktion der Signale, die Dicke d des Schmiermittelfilms 7 ortsabhängig bestimmt werden. Zusätzlich können noch weitere, hier nicht dargestellte Messeinrichtungen vorgesehen sein, die verschiedene Betriebsparameter B, wie zum Beispiel unter anderem die Drehzahl U, die Last L oder die Zylindertemperatur T der Hubkolbenbrennkraftmaschine ermitteln und diese ebenfalls der Ansteuereinrichtung 9 zuführen.

Zur Ermittlung eines Sollwerts für die Dicke d des Schmiermittelfilms 7 auf der Lauffläche 2 der Zylinderwand 3 wird eine Lookup-Table LT herangezogen, die in schematischer Weise beispielhaft in Fig. 2a dargestellt ist. Die Lookup-Table LT ist dabei ein zwei- oder mehrdimensionales Datenfeld, mit dessen Hilfe zum Beispiel aus verschiedenen relevanten aktuellen und / oder für die Hubkolbenbrennkraftmaschine spezifischen globalen Betriebsparametern B und / oder in Abhängigkeit von der Zusammensetzung Z der verwendeten Betriebsstoffe, insbesondere dem Treibstoff oder dem eingesetzten Schmiermittel, und / oder unter Berücksichtigung anderer relevanter Faktoren, ein aktueller Sollwert für den Zustandsparameter ZP, hier für die Dicke d des Schmiermittelfilms 7 ermittelt wird. Der so ermittelte Sollwert, beispielsweise für die Dicke d des Schmiermittelfilms 7, wird mit der durch den Sensor 8 ermittelten Kenngrösse K, also hier der tatsächlichen Dicke d des Schmiermittelfilms 7 verglichen und in Beziehung gesetzt. Daraus wird sodann mit Hilfe der Regelmittel 10 ein Signal zur Ansteuerung der Schmiermitteldüse 6 generiert, so dass die Schmiermitteldüse 6 gerade soviel Schmiermittel auf die Lauffläche 2 der Zylinderwand 3 aufbringt, dass die Dicke d des Schmiermittelfilms 7 optimiert ist.

Das heisst, in der Lookup-Table LT sind verschiedene, für die Ermittlung eines optimalen Wertes für den Zustandsparameter ZP, im vorliegenden Beispiel der optimalen Dicke d des Schmiermittelfilms 7 relevanten Daten gespeichert. Zusätzlich werden bevorzugt mit geeigneten Einrichtungen, die im wesentlichen für Hubkolbenbrennkraftmaschinen bereits bekannt sind, aktuelle Betriebsparameter B wie beispielsweise Drehzahl U und / oder Last L und / oder Zylindertemperatur T und / oder die Temperatur im Brennraum und / oder andere aktuelle Betriebsparameter B bestimmt, aus denen dann gemeinsam mit den in der Lookup-Table LT hinterlegten Daten der Sollwert für die optimale Dicke d des Schmiermittelfilms 7 für jeden Betriebszustand immer wieder neu bestimmt wird. Da insbesondere unter anderem auch die verwendeten Betriebsmittel und deren Eigenschaften, zum Beispiel der verwendete Treibstoff, vor allem dessen Schwefelgehalt und / oder die Art des verwendeten Schmiermittels und / oder der BN-Wert des Schmiermittels selbst, für den optimalen Wert des Zustandsparameters ZP, also beispielsweise für die optimale Dicke d des Schmiermittelfilms 7 eine zentrale Rolle spielen, können auch diese zur Ermittlung des Sollwerts vorteilhaft herangezogen und im Betrieb durch geeignete Messeinrichtung ständig überwacht werden.

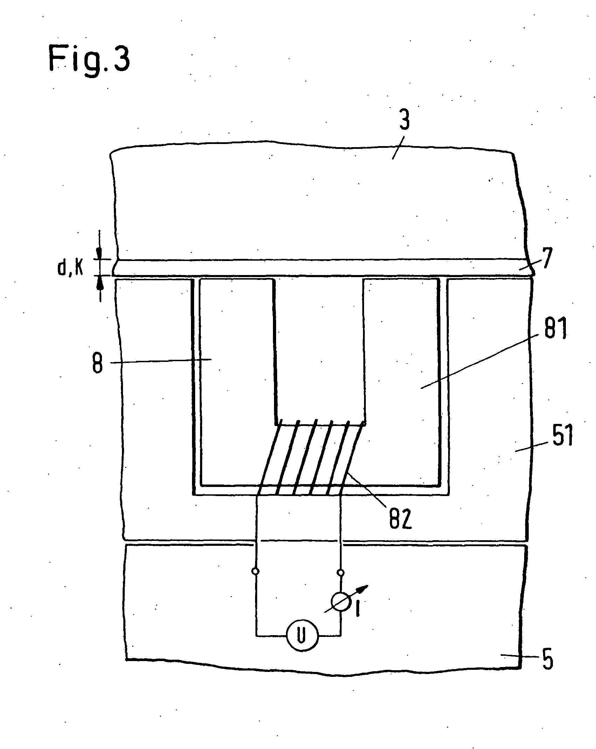

In Fig. 3 ist ein Induktionssensor dargestellt, der gemäss der Erfindung in einer Aussparung in einem Kolbenring 51 des Kolbens 5 der Hubkolbenbrennkraftmaschine angeordnet ist. Bevorzugt wird der Kolbenring 51 dabei durch geeignete, in Fig. 3 nicht gezeigte Einrichtungen derart in einer Nut des Kolbens 5 fixiert, dass keine wesentliche Verdrehung des Kolbenrings 51 im Betriebszustand stattfinden kann. Die für den Betrieb des Sensors 8 notwendigen elektrischen Anschlussleitungen können beispielsweise über ein ebenfalls nicht gezeigtes Kabelführungssystem, das bevorzugt als Koppelgetriebe ausgestaltet ist, aus dem Zylinder 4 nach aussen geführt werden. Der als Induktionssensor ausgestaltete Sensor 8 umfasst im wesentlichen einen beispielsweise U-förmigen magnetischen Kern 81, der bevorzugt als magnetischer Kern 81 mit hoher magnetischer Permeabilität, z.B. als Ferritkern 81 ausgestaltet ist, und der von einer Spule 82 umschlossen ist. Beim Anlegen einer Wechselspannung U an die Spule 82 bildet sich im Kern 81 ein magnetischer Fluss aus, der über den Schmiermittelfilm 7 und die Zylinderwand 3 in an sich bekannter Weise geschlossen wird. Dabei Besitz der geschlossene Kreis, der im wesentlichen den magnetischen Kern 81, den Schmiermittelfilm 7 mit Dicke d und die Zylinderwand 3 umfasst, einen magnetischen Widerstand, der sich als Summe der magnetischen Widerstände seiner vorgenannten Teilabschnitte ergibt. Ändert sich die Dicke d des Schmiermittelfilms 7, so ändert sich zwangsläufig auch der magnetische Widerstand, der durch den Schmiermittelfilm 7 hervorgerufen wird und damit ändert sich der magnetische Widerstand und somit die Induktivität des gesamten Kreises. Eine Veränderung der Induktivität des Kreises führt jedoch bei gegebener elektrischer Wechselspannung U an der Spule 82 zu einer Änderung des elektrischen Stromes durch die Spule 82. Somit kann durch Messung der Änderung des Stroms I durch die Spule 81 unmittelbar die Dicke d des Schmiermittelfilms 7 mit höchster Präzision gemessen werden.

Durch das erfindungsgemässe Verfahren und den Einsatz der Vorrichtung zur Durchführung des Verfahrens kann im Betriebszustand der Hubkolbenbrennkraftmaschine ein Zustandsparameter des Schmiermittelfilms auf der Lauffläche der Zylinderwand gezielt optimiert werden. Dabei kann der Zustandsparameter durch verschiedene charakteristische Kennzahlen des Schmiermittelfilms repräsentiert werden. Bevorzugt ist der Zustandsparameter des Schmiermittelfilms, der auf der Lauffläche der Zylinderwand optimiert wird die Dicke d des Schmiermittelfilms. In anderen Ausführungsvarianten kann der Zustandsparameter auch die Alkalinität, die Temperatur, die Viskosität, der Wassergehalt, der BN-Wert oder der Säuregehalt des Schmiermittelfilms sein, wobei die Liste der vorgenannten Beispiele für Zustandsparameter nicht abschliessend ist.

Die dazu notwendige Menge an Schmiermittel wird dabei bevorzugt unter Berücksichtigung verschiedener Betriebsparametern, wie der Drehzahl, der Verbrennungstemperatur, der Motortemperatur, der Kühlleistung zur Kühlung des Motors, der Last oder anderen Betriebsparametern immer wieder aktuell bestimmt.

Der Erfindung liegt dabei die wesentliche Erkenntnis zugrunde, dass zum Erreichen eines optimalen Betriebszustands der Hubkolbenbrennkraftmaschine der Zustandsparameter, im speziellen insbesondere die Dicke des Schmiermittelfims auf der Lauffläche des Zylinders, bevorzugt sogar lokal, optimiert werden muss. Das heisst, primär entscheidend ist nicht die zugeführte Menge an Schmiermittel als solches, sondern der Wert des Zustandsparameters, im speziellen die tatsächliche Dicke des Schmiermittelfilms auf der Lauffläche des Zylinders.

Durch das erfindungsgemässe wird nicht nur die Lebensdauer von Kolben, Kolbenringen und Zylinderlauffläche signifikant erhöht, sondern der Schmiermittelverbrauch wird auch gleichzeitig minimiert und die Wartungsintervalle werden merklich verlängert.

## Patentansprüche

1. Verfahren zum Schmieren einer Lauffläche (2) einer Zylinderwand (3) eines Zylinders (4) einer Hubkolbenbrennkraftmaschine, insbesondere eines langsam laufenden Grossdieselmotors, in welchem Zylinder (4) ein Kolben (5) entlang der Lauffläche (2) hin- und herbewegbar angeordnet ist, bei welchem Verfahren mittels einer Schmiermitteldüse (6) ein Schmiermittelfilm (7) auf die Lauffläche (2) der Zylinderwand (3) aufgebracht wird, und mittels eines Sensors (8) eine für den Schmiermittelfilm (7) charakteristische Kenngrösse (K) bestimmt wird, **dadurch gekennzeichnet, dass** der Sensor (8) in einem Kolbenring (51) vorgesehen wird, und dass mit einer Ansteuereinheit (9), die Regelmittel (10) umfasst, mit Hilfe eines Signals des Sensors (8) die Schmiermitteldüse (6) derart angesteuert wird, dass ein Zustandsparameter (ZP) des Schmiermittelfilms (7) auf der Lauffläche (2) der Zylinderwand (3) optimiert wird.

2. Verfahren nach Anspruch 1, wobei die Kenngrösse (K) die Dicke (d) des Schmiermittelfilms (7) ist.

3. Verfahren nach Anspruch 1 oder 2, wobei der Zustandsparameter (ZP) die Dicke (d) des Schmiermittelfims (7) ist.

4. Verfahren nach einem der vorangehenden Ansprüche, wobei der Zustandsparameter (ZP), insbesondere die Dicke (d) des Schmiermittelfilms (7) lokal optimiert wird.

5. Verfahren nach einem der vorangehenden Ansprüche, wobei ein Sollwert des Zustandsparameters (ZP), insbesondere die Dicke (d) des Schmiermittelfilms (7) in Abhängigkeit von verschiedenen Betriebsparametern (B) der Hubkolbenbrennkraftmaschine, insbesondere in Abhängigkeit von der Drehzahl (U) und / oder der Last (L) und / oder der Zylindertemperatur (T) und / oder anderen Betriebsparametern und / oder in Abhängigkeit von der Zusammensetzung (Z) eines Brennstoffs, des Schmiermittels und / oder anderer Betriebsstoffe, mit Hilfe einer Lookup-Table (LT), die in Form eines mehrdimensionalen Datenfeldes vorliegt, bestimmt wird, und der Zustandsparameter (ZP), insbesondere die Dicke (d) des Schmiermittelfilms (7) auf den Sollwert optimiert wird.

6. Vorrichtung (1) zur Durchführung eines Verfahrens gemäss einem der Ansprüche 1 bis 5, welche Vorrichtung (1) mindestens eine Schmiermitteldüse (6) zum Aufbringen des Schmiermittelfilms (7) auf die Lauffäche (2) der Zylinderwand (3) aufweist, sowie mindestens einen Sensor (8) zur Messung einer für den Schmiermittelfilm (7) charakteristischen Kenngrösse (K) umfasst, wobei der Sensor (8) in einem Kolbenring (51) vorgesehen ist, und eine Ansteuereinheit (9) für die Schmiermitteldüse (6) vorgesehen ist und die Ansteuereinheit (9) Regelmittel (10) umfasst, welche mit Hilfe eines Signals des Sensors (8) die Schmiermitteldüse (6) derart ansteuert, dass ein Zustandsparameter (ZP) des Schmiermittelfilms (7) auf der Lauffläche (2) der Zylinderwand (3) optimiert ist.

7. Vorrichtung nach Anspruch 6, wobei ein weiterer Sensor im Kolben (5) und / oder in der Zylinderwand (3) und / oder in einem Zylinderdeckel des zylinders (4) und / oder in einem dem Zylinder (4) benachbarten Bauteil (3) angeordnet ist.

8. Vorrichtung nach einem der Ansprüche 6 oder 7, wobei der Sensor (8) ein passiver Körperschallsensor ist.

9. Vorrichtung nach einem Ansprüche 6 bis 8, wobei der Sensor (8) ein aktiver Schallsensor ist.

10. Vorrichtung nach einem der Ansprüche 6 bis 9, wobei der Sensor (8) ein Induktionssensor, Wirbelstromsensor oder ein Widerstandssensor ist.

11. Vorrichtung nach einem der Ansprüche 6 bis 10, wobei der Sensor (8) ein kapazitiver Sensor ist.

12. Vorrichtung nach einem der Ansprüche 6 bis 11, wobei der Sensor (8) ein chemischer Sensor ist.

13. Vorrichtung nach einem der Ansprüche 6 bis 12, wobei der Sensor (8) ein Temperatursensor ist.

## Claims

1. A method for the lubrication of a running surface (2) of a cylinder wall (3) of a cylinder (4) of a reciprocating piston combustion engine, in particular of a slow running large diesel engine, wherein a piston (5) is arranged to be movable to and fro in said cylinder (4) along the running surface (2), and in which method a lubricant film (7) is applied by means of a lubricant nozzle (6) to the running surface (2) of the cylinder wall (3), and a parameter (K) characteristic for the lubricant film (7) is determined by means of a sensor (8), **characterised in that** the sensor (8) is provided in a piston ring (51); and **in that** the lubricant nozzle (6) is controlled by a control unit (9) which includes regulating means (10) with the aid of a signal of the sensor (8) such that a condition parameter (ZP) of the lubricant film (7) on the running surface (2) of the cylinder wall (3) is optimised.

2. A method in accordance with claim 1 wherein the characteristic parameter (K) is the thickness (d) of the lubricant film (7).

3. A method in accordance with claim 1 or claim 2 wherein the condition parameter (ZP) is the thickness (d) of the lubricant film (7).

4. A method in accordance with any one of the previous claims wherein the condition parameter (ZP), in particular the thickness (d) of the lubricant film (7), is optimised locally.

5. A method in accordance with any one of the previous claims wherein a desired value of the condition parameter (ZP), in particular the thickness (d) of the lubricant film (7), is determined in dependence on various operating parameters (B) of the reciprocating piston combustion engine, in particular in dependence on the rotational speed (U) and/or the load (L) and/or the cylinder temperature (T) and/or other operating parameters and/or in dependence on the composition (Z) of a fuel, of the lubricant and/or other operating materials, with the help of a look-up table (LT) which is present in the form of a multi-dimensional data field and the condition parameter (ZP), in particular the thickness (d) of the lubricant film (7), is optimised to the desired value.

6. An apparatus (1) for carrying out a method in accordance with any one of the claims 1 to 5, said apparatus (1) having at least one lubricant nozzle (6) for applying the lubricant film (7) to the running surface (2) of the cylinder wall (3), and also including at least one sensor (8) for measuring a parameter (K) characteristic for the lubricant film (7), wherein the sensor (8) is provided in a piston ring (51); and a control unit (9) is provided for the lubricant nozzle (6) and the control unit (9) includes regulating means (10) which control the lubricant nozzle (6) with the aid of a signal of the sensor (8) such that a condition parameter (ZP) of the lubricant film (7) on the running surface (2) of the cylinder wall (3) is optimised

7. An apparatus in accordance with claim 6 wherein a further sensor (8) is arranged in the piston (5) and/or in the cylinder wall (3) and/or in a cylinder cover of the cylinder (4) and/or in a component (3) adjacent to the cylinder (4).

8. An apparatus in accordance with any one of the claims 6 or 7 wherein the sensor (8) is a passive sensor for structure borne noise.

9. An apparatus in accordance with any one of the claims 6 to 8 wherein the sensor (8) is an active sound sensor.

10. An apparatus in accordance with any one of the claims 6 to 9 wherein the sensor (8) is an induction sensor, an eddy-current sensor or a resistance sensor.

11. An apparatus in accordance with any one of the claims 6 to 10 wherein the sensor (8) is a capacitive sensor.

12. An apparatus in accordance with any one of the claims 6 to 11 wherein the sensor (8) is a chemical sensor.

13. An apparatus in accordance with any one of the claims 6 to 12 wherein the sensor (8) is a temperature sensor.

## Revendications

1. Procédé pour lubrifier une face de roulement (2) d'une paroi de cylindre (3) d'un cylindre (4) d'un moteur à combustion interne, en particulier d'un grand moteur Diesel fonctionnant lentement, cylindre (4) dans lequel un piston (5) est disposé de façon à pouvoir exécuter un mouvement alternatif le long de la face de roulement (2), dans ledit procédé, au moyen d'une buse de lubrifiant (6), un film de lubrifiant (7) est appliqué à la face de roulement (2) de la paroi de cylindre (3), et au moyen d'un capteur (8), une grandeur caractéristique (K) pour le film de lubrifiant (7) est déterminée, **caractérisé en ce que** le capteur (8) est prévu dans un segment de piston (51), et **en ce qu'**au moyen d'une unité de commande (9), qui comprend des moyens de régulation (10), à l'aide d'un signal du capteur (8), la buse de lubrifiant (6) est commandée de façon qu'un paramètre d'état (ZP) du film de lubrifiant (7) sur la face de roulement (2) de la paroi de cylindre (3) soit optimisé.

2. Procédé selon la revendication 1, dans lequel la grandeur caractéristique (K) est l'épaisseur (d) du film de lubrifiant (7).

3. Procédé selon la revendication 1 ou 2, dans lequel le paramètre d'état (ZP) est l'épaisseur (d) du film de lubrifiant (7).

4. Procédé selon l'une des revendications précédentes, dans lequel le paramètre d'état (ZP), en particulier l'épaisseur (d) du film de lubrifiant (7), est optimisé localement.

5. Procédé selon l'une des revendications précédentes, dans lequel une valeur de consigne du paramètre d'état (ZP), en particulier l'épaisseur (d) du film de lubrifiant (7), est déterminée en fonction de divers paramètres de fonctionnement (B) du moteur à combustion interne, en particulier en fonction du nombre de tours (U) et/ou de la charge (L) et/ou de la température de cylindre (T) et/ou d'autres paramètres de fonctionnement et/ou en fonction de la composition (Z) d'un combustible, du lubrifiant et/ou d'autres carburants, à l'aide d'une table à consulter (LT) qui se présente sous la forme d'un champ de données multidimensionnel, et le paramètre d'état (ZP), en particulier l'épaisseur (d) du film de lubrifiant (7) est optimisé à la valeur de consigne.

6. Dispositif (1) pour l'exécution d'un procédé selon l'une des revendications 1 à 5, ledit dispositif (1) présentant au moins une buse de lubrifiant (6) pour appliquer le film lubrifiant (7) à la face de roulement (2) de la paroi de cylindre (3), et au moins un capteur (8) pour mesurer une grandeur (K) caractéristique pour le film de lubrifiant (7), où le capteur (8) est prévu dans un segment de piston (51), et une unité de commande (9) pour la buse de lubrifiant (6) est prévue, et l'unité de commande (9) comprend des moyens de régulation (10), qui commandent à l'aide d'un signal du capteur (8) la buse de lubrifiant (6) de façon qu'un paramètre d'état (ZP) du film de lubrifiant (7) sur la face de roulement (2) de la paroi de cylindre (3) soit optimisé.

7. Dispositif selon la revendication 6, où un autre capteur est disposé dans le piston (5) et/ou dans la paroi de cylindre (3) et/ou dans un couvercle du cylindre (4) et/ou dans un composant (3) avoisinant le cylindre (4).

8. Dispositif selon l'une des revendications 6 ou 7, où le capteur (8) est un capteur de bruit de corps passif.

9. Dispositif selon l'une des revendications 6 à 8, où le capteur (8) est un capteur de sons actif.

10. Dispositif selon l'une des revendications 6 à 9, où le capteur (8) est un capteur à induction, un capteur de courants de Foucault ou un capteur de résistance.

11. Dispositif selon l'une des revendications 6 à 10, où le capteur (8) est un capteur capacitif.

12. Dispositif selon l'une des revendications 6 à 11, où le capteur (8) est un capteur chimique.

13. Dispositif selon l'une des revendications 6 à 12, où le capteur (8) est un capteur de température.
